# EUROPEAN PATENT APPLICATION

(11) **EP 4 732 717 A1**
(43) Date of publication of application: **29.04.2026**
(21) Application number: 24875616.5
(22) Date of filing: 19.09.2024
(51) Int. Cl.: A47C 17/86, A47C 17/04, A47C 4/02, A47C 17/02, A47C 5/12

(54) **COMBINED COVERING STRUCTURE AND ASSEMBLED SOFA STRUCTURE**

(30) Priority: 12.08.2024 CN 202411100649
(71) Applicant: Qidong Vision Mounts Manufacturing Co., Ltd., Qidong Nantong, Jiangsu 226200 (CN)
(72) Inventor: ZHANG, Shanming, Nantong, Jiangsu 226200 (CN); ZHU, Wenjun, Nantong, Jiangsu 226200 (CN); LU, Hairong, Nantong, Jiangsu 226200 (CN)
(74) Representative: Chung, Hoi Kan
(86) International application number: PCT/CN2024/119590
(87) International publication number: WO 2026/036474

(57) **Abstract**

The application relates to the technical field of furniture, in particular to a combined wrapping structure and an assembled sofa structure. The combined wrapping structure comprises a plastic foam body and a support frame, wherein the plastic foam body is configured as a panel structure and comprises an outer panel, an inner panel facing away from the outer panel, and a side wall connecting the outer panel and the inner panel; the support frame is connected to the inner panel and at least partially inlaid in the inner panel in a thickness direction to be wrapped in the plastic foam body. By means of such a structural design, the overall thickness and size of the combined wrapping structure are reduced, thus reducing the space occupied by the combined wrapping structure in the transportation process and also reducing the transportation cost; the strength and stability of the combined wrapping structure are improved by the support frame, and the overall weight is reduced; in addition, the support frame is hidden in the plastic foam body, such that the aesthetics is improved, and the support frame is protected, thus improving the durability of the support frame.

## Description

### TECHNICAL FIELD

The application relates to the technical field of furniture, in particular to a combined wrapping structure and an assembled sofa structure.

### BACKGROUND

Traditional sofas are typically configured as an integrated seat-frame structure or are equipped with soft cushions. When the sofas are sold, the frame and the cushion are directly transported to customers or retail stores. However, due to the large size of furniture, the transportation and storage costs in the transportation process are high.

In the prior art, to reduce the transportation cost, an assembled structure is used to reduce the size of a sofa in the transportation process. For example, Chinese Utility Model Patent Publication No.CN215533068U discloses a sofa frame and an assembled sofa on January 18, 2022, wherein the sofa frame comprises back boards, side boards connected to the back boards, and a face board connected to the side boards, and the face board comprises at least two folding blocks, such that the space occupied by the sofa in the transportation process is further reduced.

Although the sofa adopts an assembled structure, because the frame of most existing sofas is completely wrapped, a large space will be occupied even if the sofa is disassembled to be packaged.

### SUMMARY

In view of at least one of the aforementioned technical problems, the application provides a combined wrapping structure and an assembled sofa structure to further reduce the transportation cost by structural improvements.

In a first aspect, the application provides a combined wrapping structure, comprising a plastic foam body and a support frame, wherein:
the plastic foam body is configured as a panel structure and comprises an outer panel, an inner panel facing away from the outer panel, and a side wall connecting the outer panel and the inner panel;
the support frame is connected to the inner panel and at least partially inlaid in the inner panel in a thickness direction to be wrapped in the plastic foam body.

In some embodiments of the application, a support surface of the outer panel is configured as a curved structure.

In some embodiments of the application, reinforcing ribs are arranged on the inner panel.

In some embodiments of the application, the inner panel is concaved, and the reinforcing ribs protrude with respect to the inner panel.

In some embodiments of the application, the reinforcing ribs are arranged in parallel or intersect with each other.

In some embodiments of the application, a functional structure is arranged on the inner panel and/or the reinforcing ribs, or between the reinforcing ribs.

In some embodiments of the application, the functional structure is a positioning groove used for positioning the support frame, and the positioning groove at least partially matches the support frame in shape.

In some embodiments of the application, the functional component is a connecting component used for installing or assembling the support frame.

In some embodiments of the application, the functional structure is a mounting groove used for mounting or receiving an attachment.

In some embodiments of the application, the support frame is made from at least one of metal, wood and a composite material.

In some embodiments of the application, the support frame is formed by a rod, a plate or a combination of the rod and the plate.

In some embodiments of the application, the plastic foam body and the support frame are formed integrally or assembled together.

In some embodiments of the application, the support frame is provided with a positioning structure matched with the plastic foam body, and the positioning structure is integrally formed on the support frame or arranged outside the support frame and/or on the plastic foam body 1.

In some embodiments of the application, the support frame and the plastic foam body are connected by a connector, partial wrapping, clamping or bonding.

In a second aspect, the application provides an assembled sofa structure, comprising a support frame structure, wherein the support frame structure comprises a hip support component, a back support component connected to the hip support component, and armrest components arranged on two sides of the hip support component, and at least the armrest components adopt the combined wrapping structure in the first aspect of the application.

In some embodiments of the application, the support frame structure adopts detachable connection.

In some embodiments of the application, a leg support component is connected to the hip support component, and an angle of the leg support component and an angle of the back support component are adjustable.

In some embodiments of the application, the assembled sofa structure further comprises an electric angle adjustment component used for adjusting the angle of the leg support component and/or the angle of the back support component.

The application has the following beneficial effects: by means of the connecting structure of the plastic foam body and the support frame, the overall thickness and size of the combined wrapping structure are reduced, thus reducing the space occupied by the combined wrapping structure in the transportation process and also reducing the transportation cost; by means of the above structural design, the strength and stability of the combined wrapping structure are improved by the support frame, and the overall weight is reduced; in addition, the support frame is hidden in the plastic foam body, such that the aesthetics is improved, and the support frame is protected, thus improving the durability of the support frame.

### BRIEF DESCRIPTION OF DRAWINGS

To better clarify the technical solutions in the embodiments of the application or the prior art, drawings used for describing the embodiments of the application or the prior art are briefly introduced below. Obviously, the drawings in the following description merely illustrate some embodiments of the application, and those ordinarily skilled in the art can obtain other drawings according to the following ones without creative labor.
FIG. 1 is a stereogram of an outer surface of a combined wrapping structure according to one embodiment of the application;
FIG. 2 is a stereogram of an inner surface of the combined wrapping structure according to one embodiment of the application;
FIG. 3 is a flow diagram of a method for preparing a plastic foam body according to one embodiment of the application;
FIG. 4 is an exploded structural view of a combined panel according to one embodiment of the application;
FIG. 5 is a schematic diagram of the thickness of the combined panel before and after assembly according to one embodiment of the application;
FIG. 6 is a structural view of the plastic foam body, the hardness of an inner side of which is different from the hardness of an outer side according to one embodiment of the application;
FIG. 7 is a side view of the combined wrapping structure according to one embodiment of the application;
FIG. 8 is a stereogram of an inner surface of the plastic foam body according to one embodiment of the application;
FIG. 9 is a sectional view along A-A in FIG. 8 according to one embodiment of the application;
FIG. 10 is an enlarged view of part B in FIG. 8 according to one embodiment of the application;
FIG. 11 is a schematic diagram of another arrangement of reinforcing ribs according to one embodiment of the application;
FIG. 12 is an enlarged view of part C in FIG. 8 according to one embodiment of the application;
FIG. 13 is another structural view of the plastic foam body according to one embodiment of the application;
FIG. 14 is an enlarged view of part D in FIG. 13 according to one embodiment of the application;
FIG. 15 is a structural view of a connecting component according to one embodiment of the application;
FIG. 16 is a schematic diagram of the thickness of the combined panel before and after assembly according to one embodiment of the application;
FIG. 17 is a structural view of a support frame according to one embodiment of the application;
FIG. 18 is a structural view of a support frame made from a variety of materials according to one embodiment of the application;
FIG. 19 is a sectional view of the support frame using plates as structural units according to one embodiment of the application;
FIG. 20 is a structural view of the support frame using a plate and a rod as structural units according to one embodiment of the application;
FIG. 21 is a connection diagram of the support frame and the plastic foam body in a case where the support frame and the plastic foam body are assembled structures according to one embodiment of the application;
FIG. 22 is a schematic diagram of a positioning structure of the support frame and the plastic foam body according to one embodiment of the application;

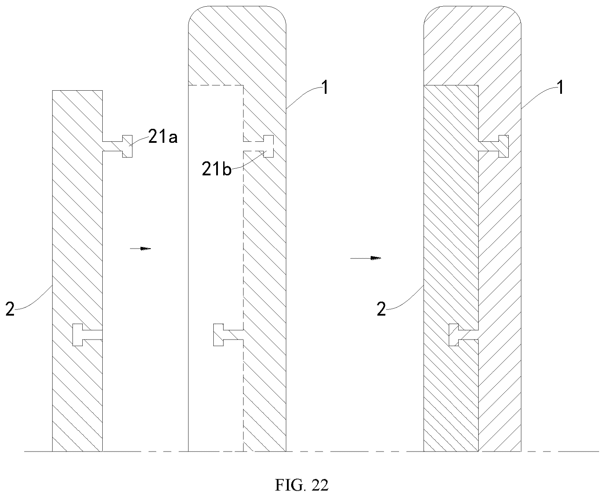

FIG. 22 is a connection diagram of the support frame and the plastic foam body in a case where the support frame and the plastic foam body are connected by partial wrapping according to one embodiment of the application;

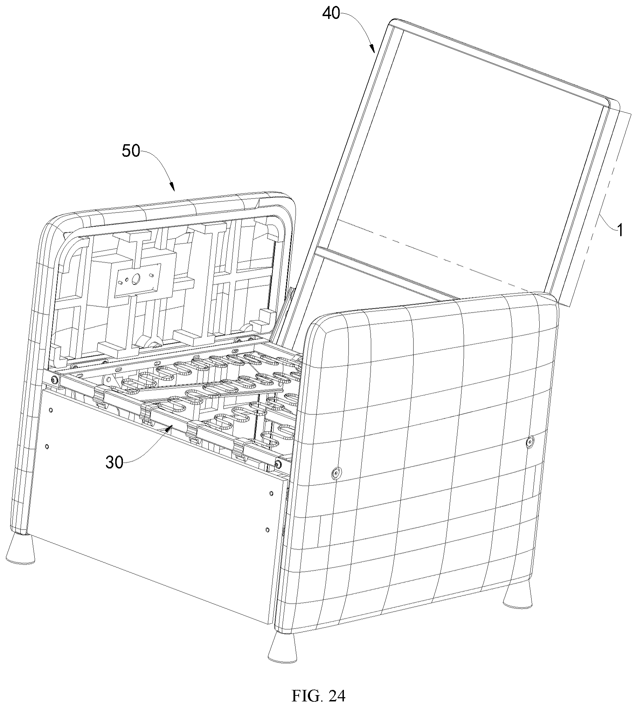

FIG. 24 is a structural view of an assembled sofa structure according to one embodiment of the application;

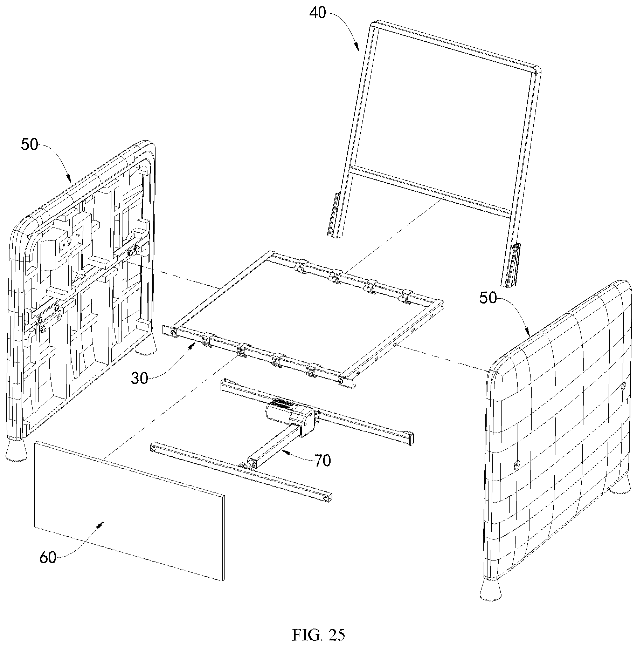

FIG. 25 is an exploded structural view of the assembled sofa structure according to one embodiment of the application;

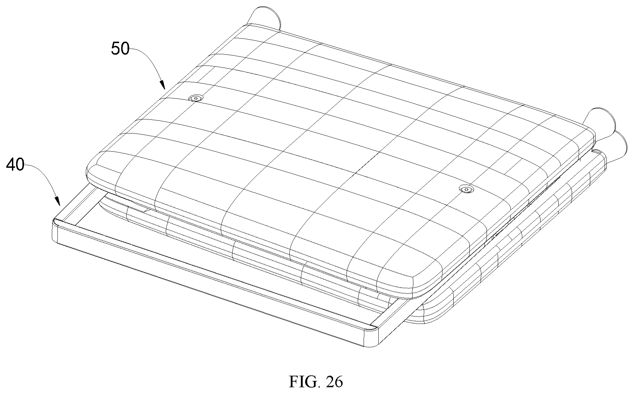

FIG. 26 is a schematic diagram of a packaging and transportation structure of the assembled sofa structure according to one embodiment of the application.

### DETAILED DESCRIPTION OF THE EMBODIMENTS

The technical solutions in the embodiments of the application will be clearly and completely described below in conjunction with accompanying drawings of these embodiments. Obviously, the embodiments in the following description are merely illustrative ones, and are not all possible ones of the application.

It should be noted that when one element is referred to as being "fixed to" the other element, it may be fixed to the other element directly or by means of an intermediate element. When one element is referred to as being "connected to" the other element, it may be connected to the other element directly or by means of an intermediate element. Terms used here such as "vertical", "horizontal", "left" and "right" and similar expressions are merely for the purpose of description and do not indicate a unique implementation.

Unless otherwise defined, all technical and scientific terms used here have the same meanings as commonly understood by those skilled in the technical field of the application. The terms are used here merely for the purpose of describing specific embodiments and are not intended to limit the application. The term "and/or" used here indicates the inclusion of any or all combinations of one or more of related items listed.

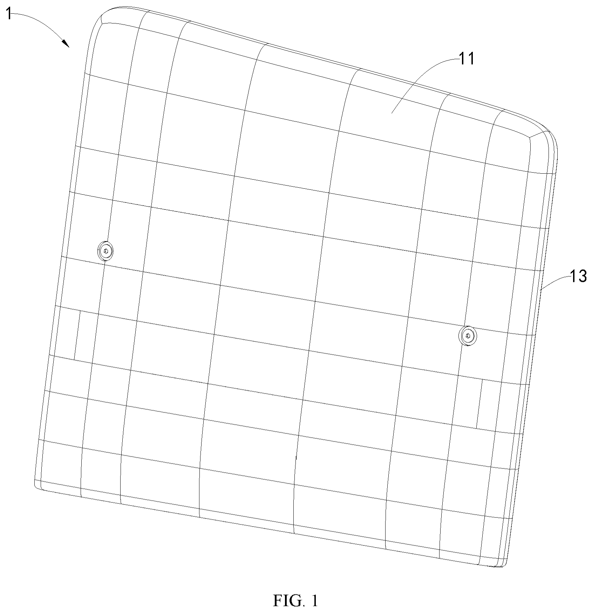

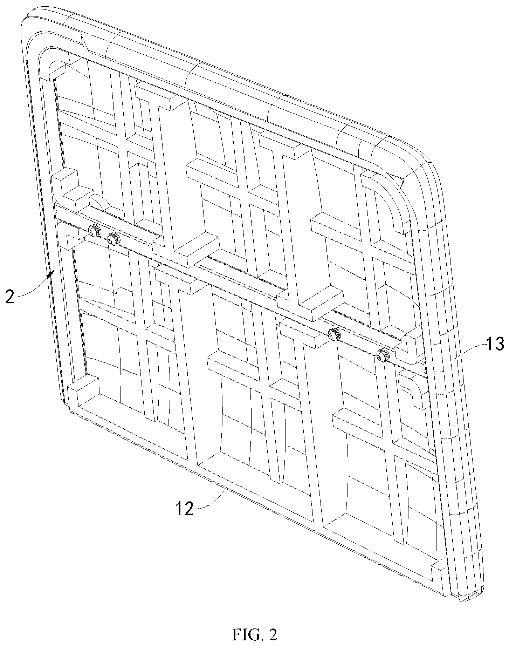

As shown in FIGS. 1 and 2, a combined wrapping structure comprises a plastic foam body 1 and a support frame 2. In the embodiments of the application, the plastic foam body may be made from a variety of materials, such as polyurethane foam, polyethylene foam, polypropylene foam, ethylene-vinyl acetate copolymer foam or expanded polypropylene. In the embodiments of the application, the plastic foam body is made from expanded polypropylene as an example, the expanded polypropylene, also referred to as EPP, is a high-performance plastic material and is featured with low weight, high elasticity, good impact resistance, heat resistance and cold resistance, environmental friendliness and good comfort. Because the expanded polypropylene is extremely light, a sofa using the expanded polypropylene is easier to transport and assemble, applies a lower pressure to the ground and can be adjusted on various ground surfaces. In addition, because the expanded polypropylene has good elasticity, shock absorptivity and support capacity, a decorative board made from the expanded polypropylene, when applied to a sofa, can guarantee sufficient shock resistance and stability; and when the expanded polypropylene is used for making a human support portion of a sofa, the sofa using the expanded polypropylene can provide good sitting comfort to release fatigue caused by long-term sitting.

In the embodiments of the application, as shown in FIGS. 1 and 2, the plastic foam body 1 is configured as a panel structure and comprises an outer panel 11, an inner panel 12 facing away from the outer panel 11, and a side wall 13 connecting the outer panel 11 and the inner panel 12. In the embodiments of the application, the plastic foam body 1 has a certain thickness, but the thickness of the plastic foam body 1 is smaller than that of a board at the same position of a traditional sofa. Here, the outer panel 11 refers to a surface facing the outside after being assembled on a sofa, and the inner panel 12 is used for connecting internal structures. The inner panel 12 faces away from the outer panel 11, which means that the inner panel 12 is arranged inside the outer panel 11. Of course, it should be noted here that the inner panel 12 and the outer panel 11 may be integrated, that is, the outer panel 11 is an outer surface, and the inner panel 12 is an inner surface; or, a cavity or other filler 22c is arranged between the outer panel 11 and the inner panel 12.

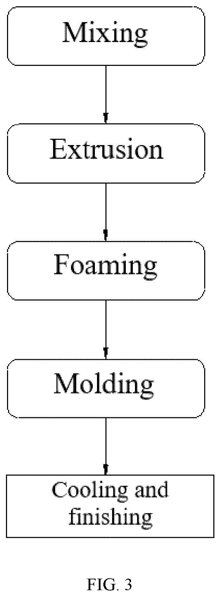

As shown in FIG. 3 which is a flow diagram of a forming process of the plastic foam body 1 according to one embodiment of the invention, the forming process of the plastic foam body 1 mainly comprises the following steps:
mixing: first, polypropylene granules, a foaming agent and other additives are mixed at a high temperature, wherein the specific formula of constituents may be set according to material requirements, for example, if the softness of the plastic foam body 1 needs to be improved, polypropylene may be added, and the use of the foaming agent is reduced; if the hardness of the plastic foam body 1 needs to be improved, the proportion of the foaming agent may be increased or a reinforcer may be added, and the reinforcer may be fiberglass or other reinforcing materials used for improving the hardness of the plastic foam body 1;
extrusion: after being mixed, the raw materials are heated and extruded by means of an extruder, in this process, the foaming agent will release gas at a high temperature to form a foam structure, and a foam material extruded from the extruder is generally in the form of a continuous long strip;
foaming: the extruded foam material is cut to be in a desired shape and is foamed under a certain temperature condition, such that the foam structure is more stable and further expanded;
molding: after being foamed, the foam material is placed in a mold and is heated and pressurized to be further molded, and in this process, different sizes and shapes may be obtained as required, for example, the shape of the mold may be designed according to components of a sofa; and
cooling and finishing: the formed plastic foam body 1 is cooled and finished to ensure that a final product satisfies design requirements and has good performance.

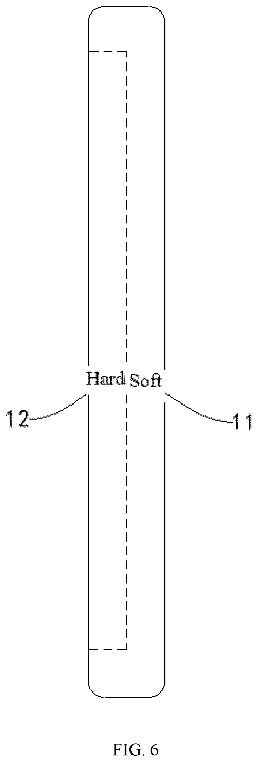

Here, it should be noted that the plastic foam body 1 may be formed at a time. If the softness the inner panel 12 needs to be different from the softness of the outer panel 11, for example, as shown in FIG. 6, in one embodiment of the application, the outer panel 11 of the plastic foam body 1 is soft while the inner panel 12 of the plastic foam body 1 is hard, molding may be performed multiple times. For example, the hard inner panel 12 is prepared from a foam material first, then the soft outer panel 11 is prepared from a foam material, and finally, the hard inner panel 12 and the soft outer panel 11 are heated and pressurized in the mold to be integrated to form a structure with the inner panel 12 being wrapped in the soft outer panel 11 and the side wall 13.

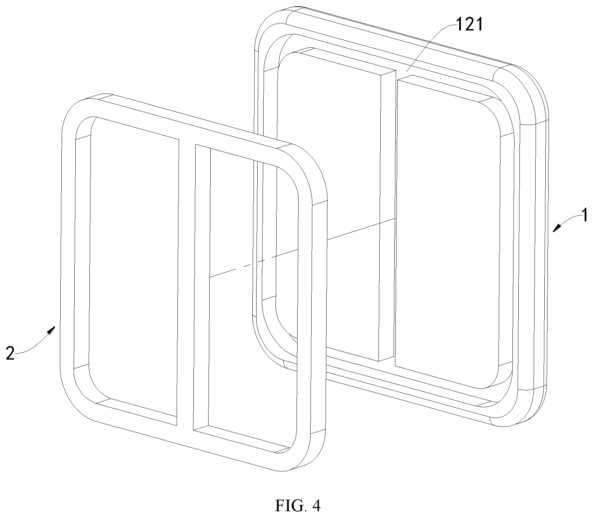

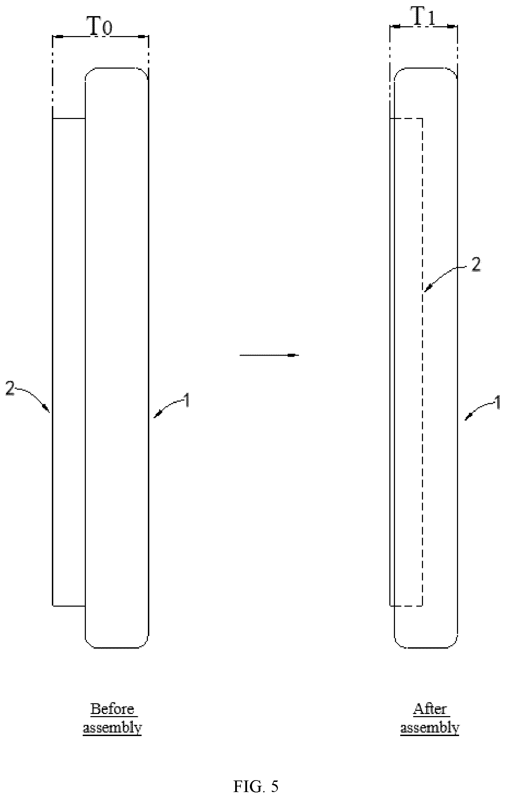

Referring to FIGS. 2 and 4, in the embodiments of the application, the support frame 2 is connected to the inner panel 12. In the embodiments of the application, the structural strength of the support frame 2 is higher than that of the plastic foam body 1 to be used for structural strengthening and connection. The support frame 2 may be connected to the inner panel 12 in various ways, which will be detailed in the following embodiments of the application. In the embodiments of the application, as shown in FIG. 4, to further reduce the overall thickness of the combined wrapping structure, the support frame 2 is at least partially inlaid in the inner panel 12 in a thickness direction to form a component with the support frame 2 being wrapped in the plastic foam body 1. Specifically, referring to FIG. 5, the total thickness of the support frame 2 and the plastic foam body 1 before assembly is T0, the total thickness of the combined wrapping structure after the support frame 2 and the plastic foam body 1 are connected is T1, and because the support frame 2 is inlaid in the plastic foam body 1, T1 is less than T0. By means of such a structural design, the overall thickness and size of the combined wrapping structure are reduced, thus reducing the space occupied by the combined wrapping structure in the transportation process and reducing the transportation cost. Moreover, by means of such a structural design, the strength and stability of the combined wrapping structure can be improved by the support frame 2, and the overall weight can be reduced; in addition, the support frame 2 can be hidden in the plastic foam body 1 and will not be exposed, such that the aesthetics is improved, the support frame 1 is protected, the durability of the support frame 2 is improved, and injuries to users caused by direct contact between the support frame 2 and human bodies are avoided.

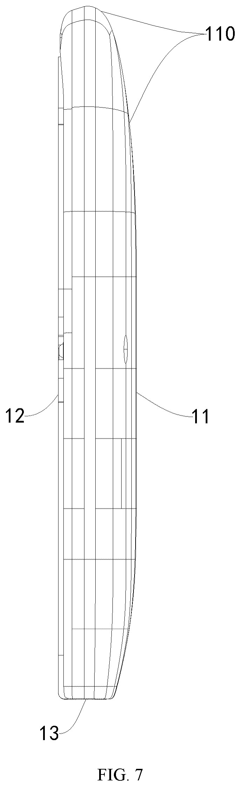

In some embodiments of the application, as shown in FIG. 7, a support surface of the outer panel 11 is configured as a curved structure 110. Here, it should be noted that in the embodiments of the application, the support surface may be a main surface of the outer panel 11, and by configuring the main surface as a curved surface, materials can be saved, the overall weight can be reduced, and a lightweight design can be realized. In addition, in the embodiments of the application, the support surface may be a transition surface between the outer panel 11 and the side wall 13, that is, the curved structure 110 can improve the structural strength and rigidity of edges and corners of the outer panel 11 and can decentralize the stress to effectively disperse and reduce external impacts, thus reducing direct damage to the outer panel 11 and improving the overall durability. In some embodiments of the application, referring to FIG. 7, curved structures 110 may be designed in the middle of the main surface and the transition surface between the outer panel 11 and the side wall 13, such that the comfort and aesthetics are improved, and cleaning and maintenance are easy. The curve design is more ergonomic, so when it is applied to a human support portion, a better support effect and comfort can be provided; the curve design can reduce gaps between panels, thus reducing bacterium and dirt accumulation; and the curve design is more beneficial to cleaning and wiping. Of course, it should be noted here that in the embodiments of the application, the curved structure 110 is not limited to the arc form shown in FIG. 7, and those skilled in the art can design the curved structure into, for example, a streamlined structure or other structures that can improve the comfort and practicability.

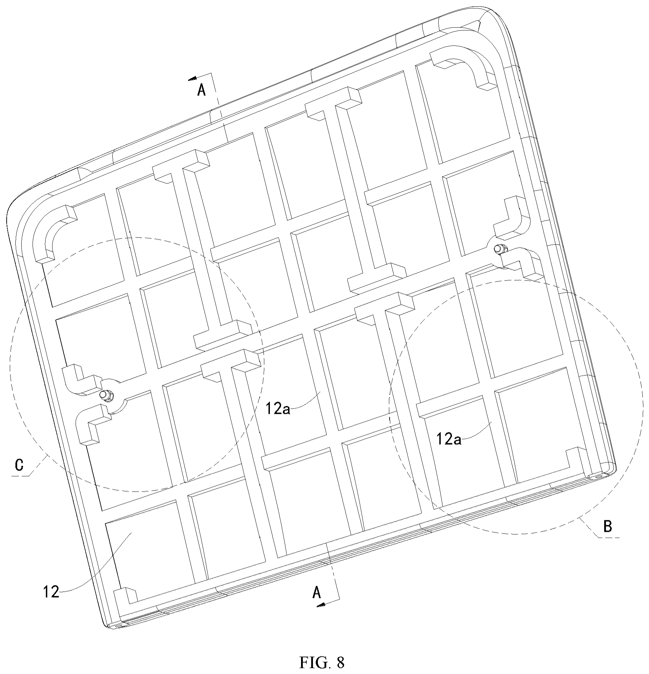

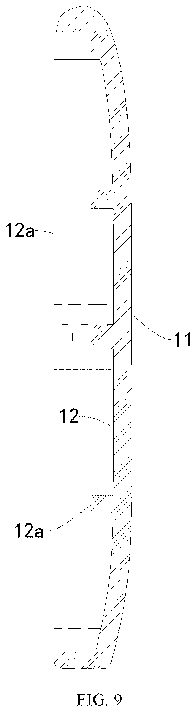

Optionally, as shown in FIGS. 8 and 9, in some embodiments of the application, reinforcing ribs 12a are arranged on the inner panel 12. The reinforcing ribs 12a can improve the strength and rigidity of the inner panel 12. Here, it should be noted that, in the embodiments of the application, the reinforcing ribs 12a may be formed in various ways, wherein the reinforcing ribs 12a may be formed integrally, or the reinforcing ribs 12a may be formed on the plastic foam body 1, or the reinforcing ribs 12a may be installed and connected onto the plastic foam body 1 after the plastic foam body 1 is formed. Specifically, in a case where the reinforcing ribs 12a are formed integrally, a model for the reinforcing ribs 12a may be directly integrated in the mold of the plastic foam body 1, and materials of the plastic foam body 1 and the reinforcing ribs 12a are placed in the mold in the forming process, such that the reinforcing ribs 12a and the plastic foam body 1 are formed synchronously. The material of the reinforcing ribs 12a may be the same as the material of the plastic foam body 1 or may be a different material such as metal or rigid plastic. After the plastic foam body 1 is formed, the reinforcing ribs 12a may be fixed to the inner panel 12 by welding, bonding, fasteners, snap fit, or the like.

In the embodiments of the application, referring to FIG. 9, to further reduce the weight and guarantee structural strength, in the embodiments of the application, the inner panel 12 is concaved, and the reinforcing ribs 12a protrude with respect to the inner panel 12. On the one hand, the concaved inner panel 12 can reduce the thickness of the plastic foam body 1; on the other hand, the concaved inner panel 12 corresponds to an arc surface of the outer panel 11, thus fulfilling a support effect under the precondition of reducing the wight of the plastic foam body 1. In the embodiments of the application, as shown in FIG. 9 which illustrates the protruding direction of the reinforcing ribs 12a, the reinforcing ribs 12a protrude in a direction perpendicular to the inner panel 12 to better support the concaved inner panel 12 and improve the support capacity and non-deformability of the plastic foam body 1, such that the plastic foam body 1 can withstand a greater load without being damaged. In the embodiments of the application, when the combined wrapping structure is used as a sofa armrest, the concaved inner panel 12 generally faces users, such that more space can be provided for the users, and the users can be supported and wrapped more comfortably; in addition, such a concave design offers more design space.

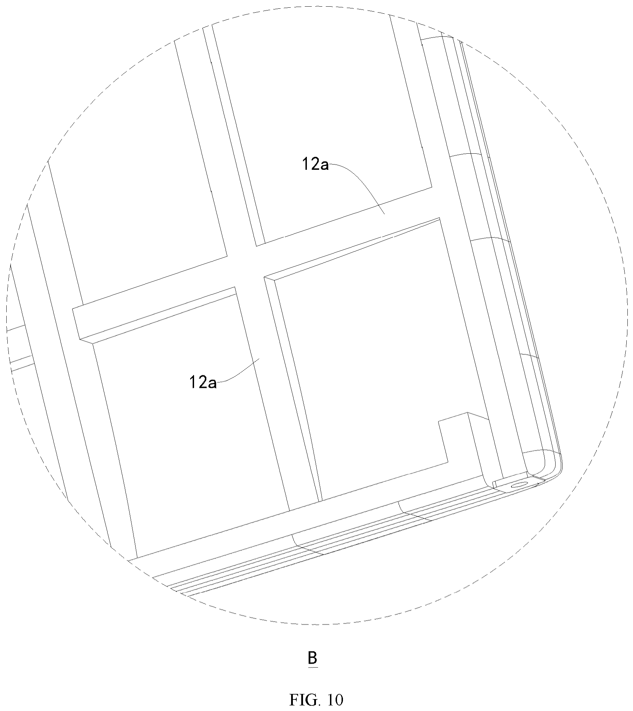

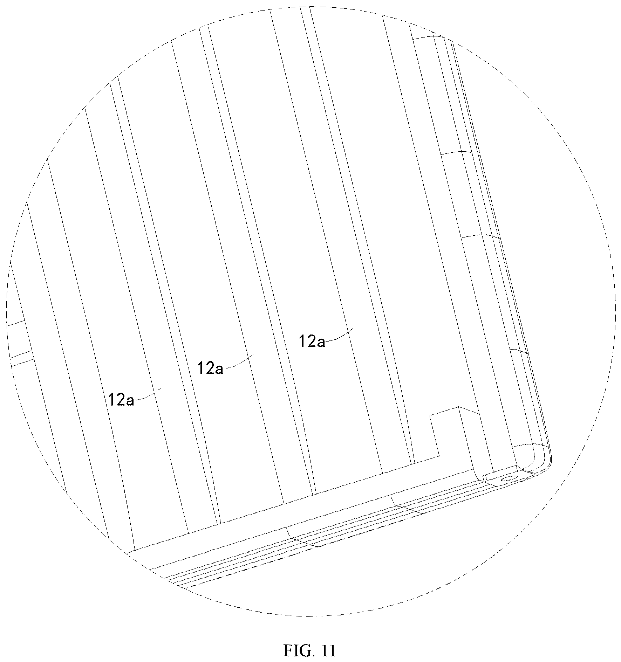

As shown in FIGS. 10 and 11, as for the specific structure of the reinforcing ribs 12a, the reinforcing ribs 12a are arranged in parallel or intersect with each other. Here, in the case where the reinforcing ribs 12a are arranged in parallel, in some embodiments of the application, the reinforcing ribs 12a may be arranged horizontally, vertically as shown in FIG. 11, or obliquely as needed. In the embodiments of the application, the reinforcing ribs 12a may intersect with each other in various structural forms, for example, the reinforcing ribs 12a may obliquely intersect with each other to form a mesh structure, or the reinforcing ribs 12a may perpendicularly intersection with each other, as shown in FIG. 10. In some embodiments of the application, the reinforcing ribs 12a may be configured as a frame structure to realize structural reinforcement. These different structures have their own advantages, for example, the reinforcing ribs 12a arranged horizontally and vertically can effectively improve the bending resistance and compressive capacity of the plastic foam body 1, the reinforcing ribs 12a configured as the mesh structure have better elasticity while improving the strength, and the reinforcing ribs 12a designed into the frame structure integrate the stability of traditional furniture and the portability of modern materials. Here, it should be noted that in some embodiments of the application, the thickness of the reinforcing ribs 12a may be set as needed. As shown in FIG. 11, in the concaved inner panel 12, an outer surface of each reinforcing rib 12a is located on a same line; on the side in contact with the inner panel 12, the thickness of the reinforcing rib 12 varies with the concavity of the inner panel 12. For example, at the position close to the center of the inner panel 12, the concavity of the inner panel 12 is large, so the reinforcing ribs 12a at this position have a large thickness to support the inner panel 12 more stably; on the edge of the inner panel 12, the radian of the inner panel 12 is small, and the thickness of the reinforcing ribs 12a is decreased accordingly. In addition, referring to FIG. 9, in the embodiments of the application, reinforcing ribs 12a of different thicknesses and shapes may be arranged to provide more functional structures 120 under the precondition of guaranteeing structural strength and saving materials. In the following description of the embodiments of the application, some examples of the functional structures 120 will be introduced, but these examples should not be construed as limitations of the application.

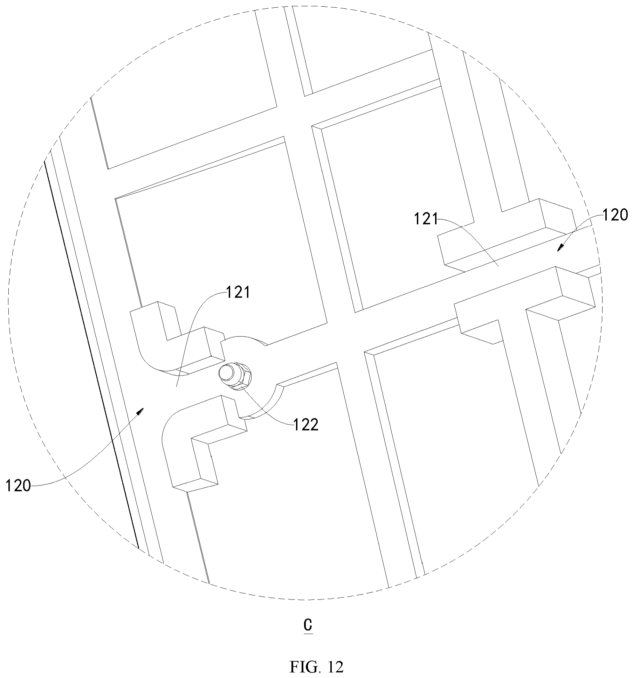

In some embodiments of the application, as shown in FIGS. 12-15, the functional structures 120 may be directly arranged on the inner panel 12, or directly arranged on the reinforcing ribs 12a, or formed between the inner panel 12 and the reinforcing ribs 12a, or arranged between adjacent reinforcing ribs 12a. The arrangement of the functional structures 120 can diversify the functions of a sofa and improve the practicability of the sofa. The design of these functional structures 120 can improve the assembly efficiency and structural stability of a product and can allow for the installation of more attachments. In the embodiments of the application, the functional structures 120 may be in various forms, for example, the functional structures 120 may be positioning pins or grooves, and by directly arranging the positioning pins or grooves on the inner panel 12 or on the reinforcing ribs 12a, the support frame 2 can be accurately positioned and fixed. In the embodiments of the application, materials that are as sturdy as the expanded polypropylene or sturdier than the expanded polypropylene are used. The functional structures 120 may also be insertion holes and clips to realize quick installation of attachments, and in this case, sofa components can be quickly detached, replaced or upgraded. The functional structure is described below by way of examples.

In some embodiments of the application, as shown in FIG. 12, the functional structure 120 is a positioning groove 121 used for positioning the support frame 2, and the positioning groove 121 at least partially matches the support frame 2 in shape. In the embodiments of the application, the positioning groove 121 may be formed in the mold when the plastic foam body 1 is formed, the space of the mold is filled with the expanded polypropylene, and the positioning groove 121 is formed at a protrusive position in the mold. In addition, the positioning groove 121 may be formed by machining. For example, first, excess materials are removed by rough machining in a CNC machining center to form a basic groove, and then the basic groove is finished to ensure that the size and depth of the positioning groove 121 satisfy design requirements. In addition, in the embodiments of the application, the positioning groove 121 may be directly formed in the positioning ribs 12a, such that extra mechanical support can be provided, and the stability can be improved. Compared with the scheme where the positioning groove 121 is directly formed in the inner panel 12, the scheme where the positioning groove 121 and the reinforcing ribs 12a are formed integrally can improve the overall durability and support capacity. As shown in FIG. 12, in the embodiments of the application, the positioning groove 121 may be formed by two adjacent reinforcing ribs 12a, for example, the positioning groove 121 matching a support body of the support frame 2 in width may be formed between two adjacent reinforcing grooves 12a by means of the variation in thickness. Here, it should be noted that in the embodiments of the application, the positioning groove 121 may completely match the support frame 2 in shape, as shown in FIG. 4; or, multiple positioning grooves 121 may be formed at corners and stress points of the support frame 2, as shown in FIG. 12. The positioning groove 121 not only can facilitate the installation of the support frame 2, but also can reinforce the plastic foam body. Of course, the shape of the positioning groove 121 is not limited, and the positioning groove 121 may be a straight groove with two open sides, an arc-shaped positioning groove 121 arranged at a corner, a T-shaped groove, a cross-shaped groove, etc. In the embodiments of the application, the positioning groove 121 may be used for the installation of the support frame 2. For example, a protrusion corresponding to the positioning groove 121 may be arranged on the support frame 2, and a screw in snap fit or threaded fit with the support frame 2 is arranged in the positioning groove 121, such that the support frame 2 can be quickly positioned and fixed.

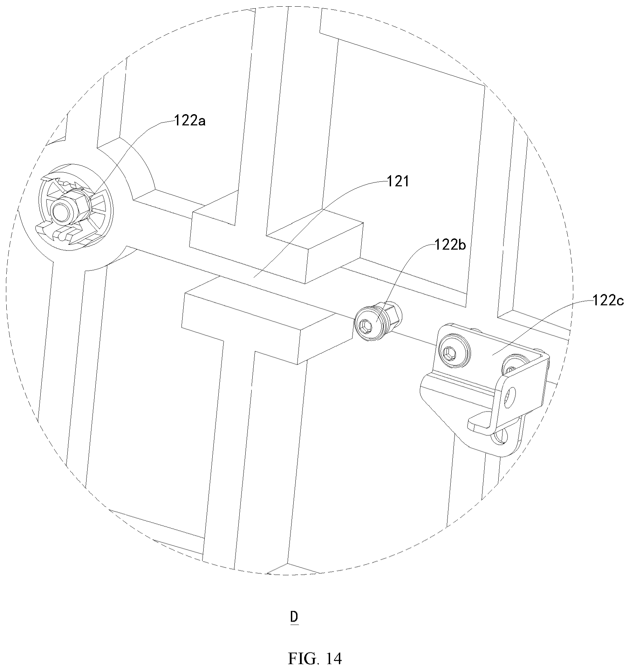

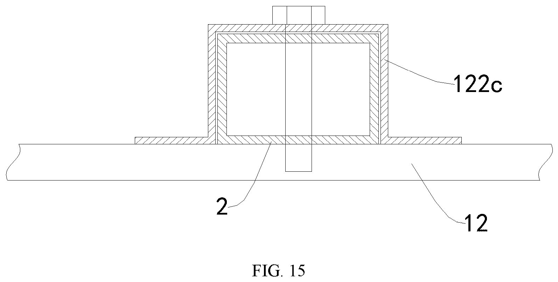

In some embodiments of the application, further referring to FIG. 14, the functional structure 120 is a connecting component 122 used for installation or assembly of the support frame 2. Here, the connecting component 122 may be a combined clamping component 122a shown in FIG. 14, or a fastening component 122b detachably connected to the reinforcing ribs 12a, or a snap-on component 122c matched with the fastening component 122b. In the embodiments of the application, as shown in FIG. 14, the combined clamping component 122a is provided with two clamping arms arranged opposite to each other, the support frame 2 is clamped between the two clamping arms, and clamping teeth are arranged on sides, facing each other, of the two clamping arms at intervals, such that components on the support frame 2 can be tightly clamped between the two clamping arms and will not move relatively; in addition, protrusive positioning pillars or grooves are formed in the middle of the two clamping arms, and holes corresponding to the positioning pillars are formed in the support frame 2 for specific installation of the support frame 2. Further, the support frame 2 may be further fixed by means of nuts or screws. Such a structure is also suitable for assembly of two support frames 2. For example, two combined clamping components may be arranged at a joint of the support frames 2 to improve the assembly reliability of the support frames 2. Referring to FIG. 14 again, the structure of the fastening component 122b is relatively simple, threaded holes may be formed in the reinforcing ribs 12a or nuts may be pre-embedded in the reinforcing ribs 12a to form structures corresponding to holes in the support frame 2, and installation or assembly of the support frame 2 is realized by means of bolts. In addition, bolts may be pre-embedded to realize installation or assembly of the support frame 2. In the embodiments of the application, the snap-on component 122c may be in various structural forms. The snap-on component 122c may be a cap-like socket structure, show in FIG. 15, formed between the reinforcing ribs 12a and work together with a pre-embedded nut to realize installation or assembly of the support frame 2 inserted into the plug-in structure 122c. Of course, those skilled in the art can adopt other clip-on or embedded functional structures 120 as needed to realize installation or modular assembly of the support frames 2 so as to improve the flexibility and practicability of the combined wrapping structure.

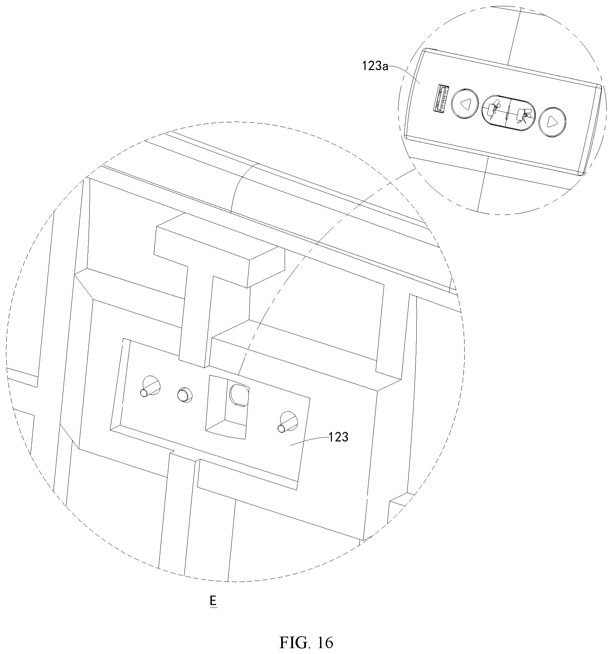

In some embodiments of the application, as shown in FIG. 16, the functional structure 120 may be a mounting groove 123 used for mounting or receiving an attachment. Here, the mounting groove 123 may be directly integrated on the reinforcing ribs 12a or formed between adjacent reinforcing ribs 12a, and the attachment may be an operation panel of an electric sofa, as shown in FIG. 16. The operation panel 123a is fixed in the mounting groove 123 to adjust the reclining angle of the electric sofa. Of course, it should be noted here that the mounting groove 123 may be directly molded in the inner panel 12 or machined later. Specifically, when the operation panel 123a is fixed, a stepped mounting groove may be adopted, and the operation panel 123a is fixed in the mounting groove by bonding, clamping or bolt fastening. Of course, it should also be noted here that in addition to the operation panel 123, the attachment may be a wire duct for various wires. In addition, in the embodiments of the application, the mounting groove 123 may be a cup holder, a storage groove, or other structures.

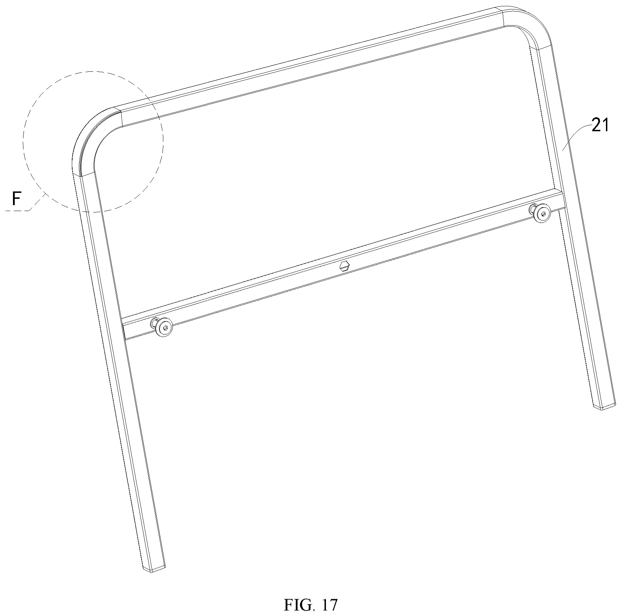

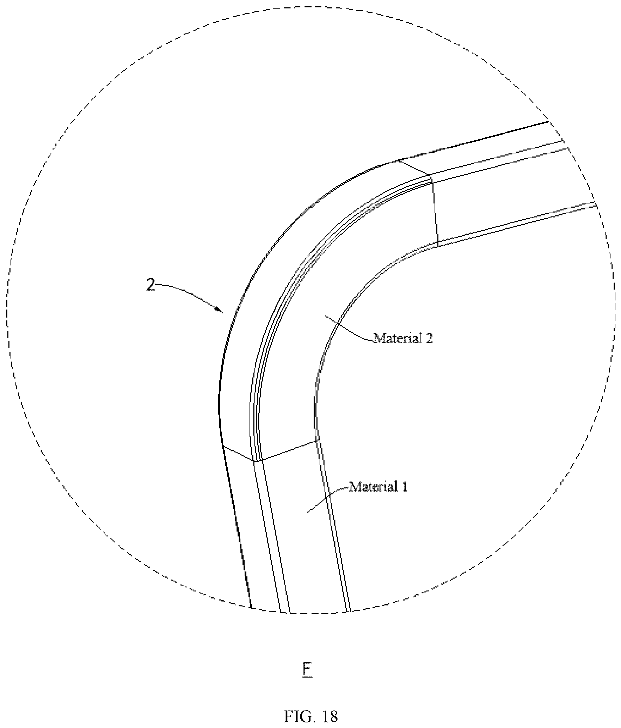

In the embodiments of the application, the support frame 2 is made from at least one of metal, wood and a composite material. In specific design, the support frame 2 may be made from a variety of materials to satisfy different requirements and design standards. In some embodiments of the application, for example, the support frame 2 may be made from steel or aluminum alloy to gain high strength and durability. In the case where the support frame 2 is made from steel, rectangular stainless steel tubes may be adopted. In the case where the support frame 2 is made from aluminum alloy, aluminum alloy sections may be adopted. By means of these hollow tubes, the overall weight of the support frame 2 can be reduced, and good structural stability of the support frame 2 can be guaranteed. In specific formation of the support frame 2 made from metal, first, a metal sheet is stamped to be in a desired shape to form the support frame 2; or, the support frame 2 is directly machined from metal tubes, specifically, the tubes are bent to a specific radian by means of a tube bender, and then the tubes are connected by welding or fasteners to form a frame structure. Wood has good processability and may be connected by tenon and mortise structures and glue, and the wood is light, has a good support capacity, and can be easily combined with the expanded polypropylene. In specific machining, first, the wood is cut and polished with a wood working tool or a CNC lathe, and then processed wood components are assembled with screws, nails or adhesives to form the support frame 2. The composite material may be in various forms. For example, the composite material may be glass fiber reinforced plastic, carbon fiber composite or other polymer materials. The composite material may be formed in various ways, for example, the carbon fiber material may be formed by hand laying-up, pultrusion, lamination, or the like. Those skilled in the art can select the specific formation method as actually needed. Of course, the support frame 2 may be made from two or more materials to integrate the advantages of different materials. For example, the support frame 2 may be made from aluminum alloy and glass fiber reinforced plastic, as shown in FIGS. 17 and 18, a main frame structure is made from aluminum alloy, and the glass fiber reinforced plastic is embedded in or wrap around joints of the aluminum alloy, stress-concentrated portions or portions requiring higher rigidity, such that the mechanical performance of the whole structure is improved by integrating the strength of the aluminum alloy and the rigidity of the glass fiber reinforced plastic. Or, the support frame 2 may be a combined frame structure made from steel and glass fiber reinforced plastic, or a combined frame structure made from a natural fiber composite material and a polymer matrix, which will not be detailed here.

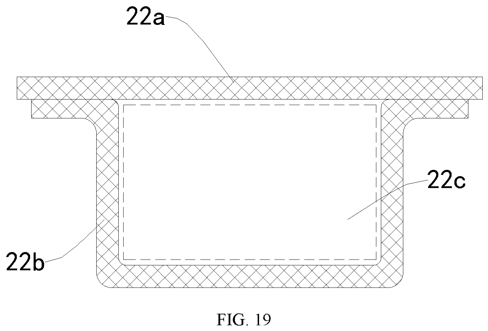

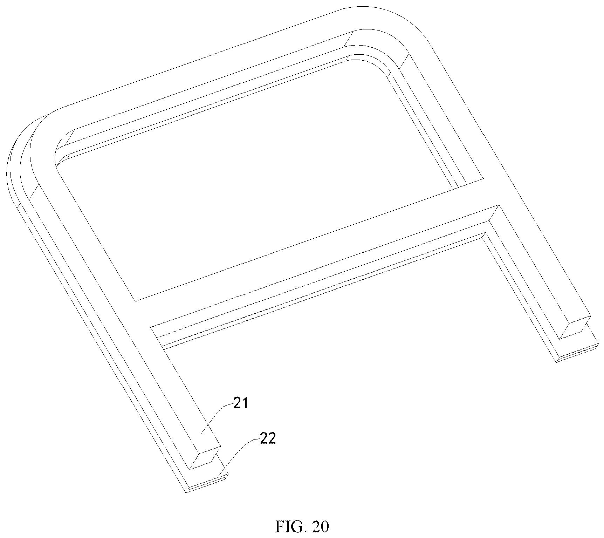

In some embodiments of the application, the support frame 2 is formed by a rod 21, a plate 22 or a combination thereof. FIG. 17 illustrates a support frame 2 formed by the rod 21, which may be specifically a rectangular aluminum alloy or stainless steel tube as mentioned above, and the cross-section of the tube is hollow. The tube is bent by a tube bender to form bends shown below. When the support frame 1 is assembled, connection is implemented by insertion, welding, screws or other fasteners. The connection between the support frame 2 and the plastic foam body 1 has been detailed above, and those skilled in the art can appreciate it with reference to the above description. In some embodiments of the application, the support frame 2 may be integrally made from a composite material by hot molding, or the support frame 2 may be made from wood by cutting, polishing and gluing. Specifically, the support frame 2 may be connected to the plastic foam body 1 by plug-in connection, snap fit, or welding and bonding. The support frame 2 formed by the rod 21 has good strength and rigidity and may be in a complex shape by bending, extrusion, welding, etc. In some embodiments of the application, the support frame 2 is formed by the plate 22 to provide a large support area and realize uniform stress. Specifically, the support frame 2 may be formed by the plate 11 by bending or lamination. As shown in FIG. 19 which is a schematic diagram of the cross-section of the support frame 2 formed by two plates 22, the support frame 2 comprises a horizontal plate 22a and a U-shaped plate 22b connected to the horizontal plate 22a, and in this case, the support frame 2 may be formed by welding metal plates or by gluing composite materials. Of course, the support frame 2 may also be formed by the connecting component 122. As shown in FIG. 19, those skilled in the art can fill a cavity of the U-shaped plate 22b with filler 22c to further improve the structural reliability of the support frame 2. In addition, as shown in FIG. 20, in the embodiments of the application, the support frame 2 may be formed by the rod 21 and the plate 22. Such a support frame 2 integrates the structural strength of the rod 21 and the support advantages of the plate 22, and makes an optimal balance in strength, rigidity, weight and cost; in addition, the connection reliability between the support frame 2 and the plastic foam body 1 can be improved by means of the advantage in connection between the plate 22 and the rod 21. In addition, in the embodiments of the application, multiple support frames 2 may be assembled and connected by means of the plate 22 or the rod 21 to support the plastic foam body 1 with a larger area.

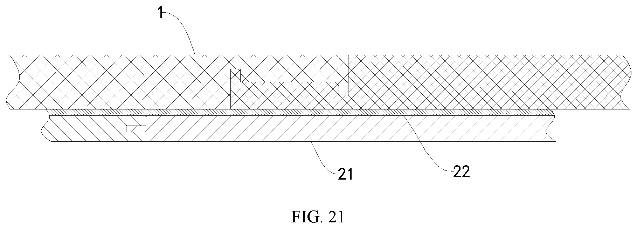

In some embodiments of the application, the plastic foam body 1 and the support frame 2 may be connected in various forms, and the plastic foam body 1 and the support frame 2 are formed integrally or assembled together. Specifically, one support frame 2 may be fixed to one plastic foam body 1; or, multiple plastic foam bodies 1 may be fixed to one support frame 2, and in this case, the plastic foam bodies 1 are assembled together and then connected to the support frame 2; or, multiple support frames 2 may be fixed to one plastic foam body 1, and in this case, the support frames 2 are assembled together or are combined to be fixed regionally. In the embodiments of the application, if the plastic foam body 1 has a large area, multiple support frames 2 are assembled together and then connected to multiple expanded polypropylene panels that are assembled together. As shown in FIG. 21, in the embodiments of the application, when multiple plastic foam bodies 1 assembled together are connected to multiple support frames 2 assembled together, joints are staggered, the support frame 2 is formed by the plate 22 and the rod 21, and the plate 22 at the joints should be intact to ensure that the joints on two sides can be reliably fixed by the plate 22, thus ensuring overall structural strength.

In some embodiments of the application, the support frame 2 is provided with a positioning structure matched with the plastic foam body 1, and the positioning structure is integrally formed on the support frame 2 or arranged outside the support frame 2 and/or on the plastic foam body 1. In the above embodiments of the application, the functional structure 120 (positioning groove 121) formed in the reinforcing ribs 12a or the inner panel 12 has been introduced. In the embodiments of the application, in addition to the positioning groove 121 formed in the reinforcing ribs 12a, a corresponding protrusion may be arranged on the support frame 2; or, a positioning protrusion is arranged on the support frame 2, and a corresponding recess is formed in the plastic foam body 1, such that the support frame 2 and the plastic foam body 1 can be quickly positioned when connected. In addition, in some embodiments of the application, in the case where the support frame 2 and the plastic foam body 1 are formed integrally, as shown in FIG. 22, anchoring protrusive portions 21a are formed on a side, facing the plastic foam body 1, of the support frame 2, corresponding anchoring concave portions 21b are arranged on a corresponding side of the plastic foam body 1, and the anchoring protrusive portion 21a and the anchoring concave portion 21b are melted to be wrapped together and then cooled and solidified to realize fixed connection between support frame 2 and the plastic foam body 1. Of course, the anchoring protrusive portions 21b may be arranged on the support frame 2. In this way, positioning is realized, and the support frame 2 and the plastic foam body 1 are fixed together. Similarly, when the support frame 2 and the plastic foam body 1 are installed separately, the anchoring protrusive portions 21a may deform to position the support frame 2. Of course, those skilled in the art can change the anchoring protrusive portions 21a into prismatic portions to fulfill a positioning effect. In addition, in the embodiments of the application, the positioning structure arranged outside the support frame 2 or on the plastic foam body 1 may be in various forms. For example, the positioning structure may be a plug-and-jack structure. Specifically, the plug-and-jack structure may comprise a jack fixed to the plastic foam body 1 and a plug fixed to the support frame 2, or comprise a plug fixed to the plastic foam body 1 and a jack fixed to the support frame 2.

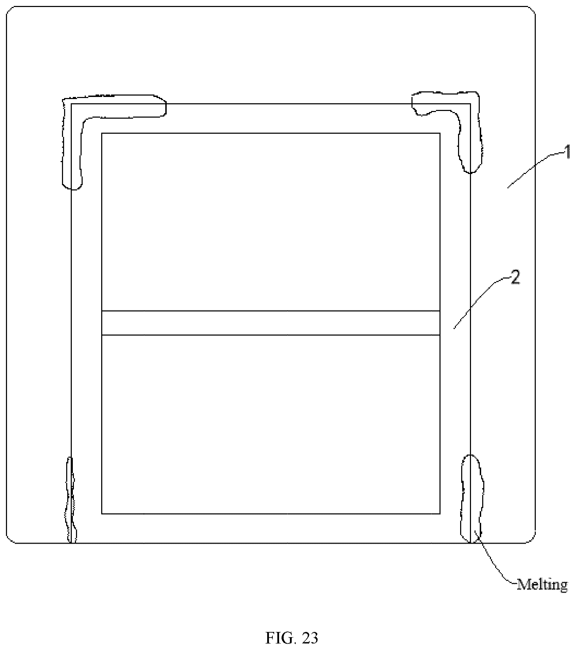

In some embodiments of the application, the connection form between the support frame 2 and the plastic foam body 1 has been introduced above and will be further introduced below. In some embodiments of the application, the support frame 2 and the plastic foam body 1 are connected by means of a connector. Here, the connector may be a conventional connector, for example, a nut may be pre-embedded in the plastic foam body 1, a hole allowing a bolt to penetrate through is formed in the support frame 2, and the bolt and the nut are threadedly connected to realize connection between the support frame 2 and the plastic foam body 1. Of course, in the embodiments of the application, the connector may also be, for example, an expansion screw, or a non-standard connecting structure matching the cross-section of a component unit oof the support frame 2 may be arranged to realize connection between the support frame 2 and the plastic foam body 1. In the embodiments of the application, the support frame 2 and the plastic foam body 1 may be connected by partial wrapping, and here, "partial wrapping" may be embedded connection, that is, a groove corresponding to the support frame 2 is formed in the plastic foam body 1, and the support frame 2 is inlaid in the corresponding groove to be fixed. Here, "partial wrapping" may be hot melting. As shown in FIG. 23, the plastic foam body 1 and the support frame 2 are melted by local heating, and then cooled and solidified to be connected together. The plastic foam body 1 and the support frame 2 may be connected by partial wrapping by means of the anchoring protrusive portions 21a and the anchoring concave portions 21b in the above embodiment. In the embodiments of the application, the plastic foam body 1 and the support frame 2 may be connected by clamping or bonding. Specifically, a clamping head is arranged on the support frame 2 and a clamping base is arranged on the plastic foam body 1; or, the support frame 2 is fixed to the plastic foam body 1 by means of a plastic or metal fastener. In the embodiments of the application, when the plastic foam body 1 and the support frame 2 are connected by bonding, corresponding tenon and mortise structures may be arranged, or the contact area may be enlarged to improve the bonding reliability.

In the other aspect, the application provides an assembled sofa structure which, as shown in FIG. 24, comprises a support frame structure. The support frame structure comprises a hip support component 30, a back support component 40 connected to the hip support component 30, and armrest components 50 arranged on two sides of the hip support component 30, wherein at least the armrest components 50 adopt the combined wrapping structure mentioned above. In some embodiments of the application, as shown in FIG. 24, the combined wrapping structure may be used as a component of the support frame structure of the assembled sofa structure, for example, the armrest components 50 may be implemented by the combined wrapping structures. In specific connection, as shown in FIG. 24, the outer panel 11 of the plastic foam body 1 of the armrest component 50 faces a surface, facing the hip support component 30, of the support frame 2, such that connection of the armrest component 50 is facilitated, and the functional component on the inner panel 12 of the plastic foam body 1, such as an operation panel 123a, a cup holder or a storage groove, is allowed to face users to improve practicability. In addition, because the armrest components 50 are installed separately, a sofa product can be diversified, that is, armrests in different colors and shapes and with different pattens can be assembled as required by customers to satisfy the requirements of the customers. In specific structural connection, the armrest components 50 may be fixed to the two sides of the hip support component 30 to be used as armrests; or, the armrest components 50 may extend to the bottom of the hip support component 30, and the bottoms of the armrest components 50 are connected to the support frames 2, such that the armrest components 50 not only function as support components for supporting the hip support component 30, but also function as armrests allowing users sitting on a sofa to place their arms thereon. The back support component 40 and the hip support component 30 may be connected at a fixed angle or at an adjustable angle, which will be detailed in the following description of the embodiments of the application. In addition, in the embodiments of the application, the combined wrapping structure may be attached to a sofa component as a partial structure. For example, as shown in FIG. 24, the combined wrapping structure is fixed to a back side of the back support component 40 to improve appearance aesthetics and protect the back support component 40 to prevent the back support component 40 from being damaged in the transportation and moving process.

Optionally, as shown in FIG. 25, in the embodiments of the application, the support frame structure adopts detachable connection. Specifically, as shown in FIG. 25, in some embodiments of the application, the armrest components 50 also function as support components for supporting the hip support components 30, and in this case, the hip support component 30 is configured as a frame structure; in specific connection, the armrest components 50 are connected and fixed to the two sides of the hip support component 30, and then, the back support component 40 and the armrest components 50 or the hip support component 30 are connected by bolt fastening, snap fit or in other ways. As shown in FIG. 26, when the sofa structure is disassembled to be packaged, the two armrest components 50 may be arranged opposite to each other to allow the outer panels 11 to face outwards, and the back support component 40 and the hip support component 30 are clamped between the two armrest components 50. In the embodiments of the application, the inner panels 12 of the two armrest components 50 are concaved to form a large receiving space between the two opposite armrest components 50, and the hip support component 30 and the back support component 40 may be clamped between the two armrest components 50 and then placed in a transportation and packaging box. Compared with the prior art, such an arrangement obviously reduces the space occupied by a sofa in the transportation process and reduces the transportation cost; in addition, the plastic foam bodies 1 on the armrest components 50 can further protect internal sofa components.

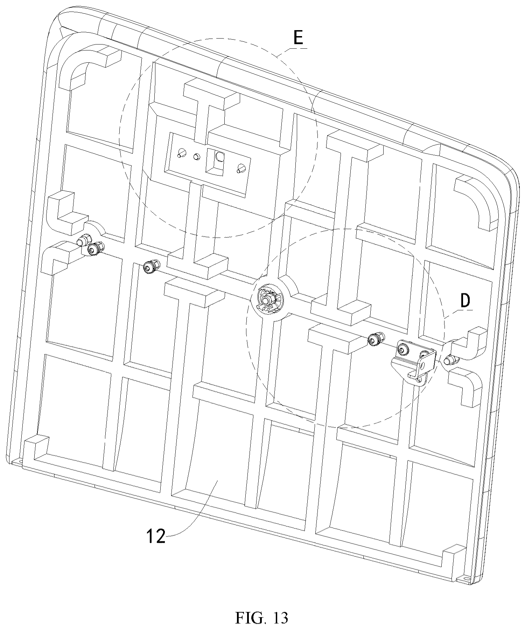

In some embodiments of the application, a leg support component 60 is connected to the hip support component 30, and the angle of the leg support component 60 and the angle of the back support component 40 are adjustable. In the embodiments of the application, the leg support component 60 may be formed by the combined wrapping structure mentioned above. In specific connection, the leg support component 60 and the back support component 40 may be rotatably connected to the hip support component 30, such that the leg support component 60, the hip support component 30 and the back support component 40 can be folded. Specifically, when the sofa structure is disassembled, the armrest components 50 are detached from the two sides of the hip support component 30; then, the leg support component 60 is folded towards the hip support component 30; next, the back support component 40 is folded towards the hip support component 30, such that the leg support component 60, the back support component 40 and the hip support component 30 are folded into a plate 22 and then wrapped by the two folded armrest components 50 on two sides to form the transportation and packaging structure shown in FIG. 26. Of course, it should be noted here that in the embodiments of the application, the angle of the leg support component 60 and the angle of the back support component 40 may be adjusted manually, electrically or in other ways. Specifically, a gear adjustment structure may be adopted. For example, gears are arranged at a joint between the leg support component 60 and the hip support component 30 and on a joint between the back support component 40 and the hip support component 40, the gears may be locked at different angles, and users can adjust the positions of the gears by means of a rotary handle or a button to change the angle of the legs and the angle of the back. In addition, a pull-rod adjustment structure may be adopted. That is, telescopic pull rods are arranged on the leg support component 60 and the back support component 40, lock plates provided with lock holes are fixed in areas where the leg support component 60 and the back support component 40 rotate, and the pull rods can be pulled to drive the leg support component and the back support component 40 to rotate until the pull rods reach suitable lock holes, and then, the telescopic pull rods stretch into the lock holes to fix the angle of the leg support component 60 and the angle of the back support component 40. Moreover, a pneumatic adjustment mechanism may be adopted. For example, the leg support component 60 and the back support component 40 are rotatably connected to the hip support component 30 by means of hinges, and the angle of the leg support component 60 and the angle of the back support component 40 are adjusted by means of pneumatic cylinders, control valves or button controllers. In the embodiments of the application, as shown in FIGS. 13 and 16, buttons for controlling cylinders to act are arranged inside the armrest components 50, such that users can easily adjust the angle of the leg support component 60 and the angle of the back support component 40 in a sitting posture. Of course, it should be noted here that the angle of the back support component 40 and the angle of the leg support component 60 may also be adjusted by means of many other structures, and those skilled in the art can configure corresponding structures as needed. In addition, in some embodiments of the application, to limit the rotation angle of the leg support component 60 and the rotation angle of the back support component 40, limiting members may be arranged to realize partial rotation and fixing of the leg support component 60 and the back support component 40.

In some embodiments of the application, the angle of the leg support component 60 and the angle of the back support component 40 may be adjusted by means of an electric angle adjustment component 70. In some embodiments of the application, the electric angle adjustment component 70 may be an electric push rod, a motor screw nut or other structures. Specifically, when the angle of the leg support component 60 and the angle of the back support component 40 are adjusted, the leg support component 60 is rotatably connected to the hip support component 30 by means of a hinge, and the back support component 40 is rotatably connected to the hip support component 30 by means of hinge, such that the angle of the leg support component 60 and the angle of the back support component 40 can be adjusted separately, that is, one electric push rod pushes the leg support component 60 to adjust the angle of the leg support component 60, and the other electric push rod pushes the back support component 40 to adjust the angle of the back support component 40. Or, the leg support component 60 and the back support component 40 may be pushed synchronously, that is, one electric push rod is used to push both the leg support component 60 and the back support component 40 to adjust the angle of the leg support component 60 and the angle of the back support component 40. On the contrary, when the electric push rods retract, the back support component 40 and the leg support component 60 restore. Here, it should be noted that in the embodiments of the application, operation panels 123a for controlling the electric push rods to act may be arranged inside the armrest components 50, as shown in FIG. 16, that is, the operation panels 123a are arranged on the inner panels 123 of the plastic foam bodies 1 in the embodiments of the application. Of course, it should be noted here that the above driving structures are merely illustrative ones in the embodiments of the application, those skilled in the art can make some common transformations based on the above structures, and all these transformations should also fall within the protection scope of the application. It should also be noted here that the above driving components may be detached to be packaged and transported as attachments.

Those skilled in the art should understand that the application is not limited to the above embodiments, and the above embodiments and descriptions are merely used for explain the principle of the application. Various transformations and improvements can be made to the application without departing from the spirit and scope of the application, and all these transformations and improvements should also fall within the protection scope of the application. The protection scope of the application is defined by the appended claims and their equivalents.

## Claims

1. A combined wrapping structure, being applied to a sofa component and comprising a plastic foam body and a support frame, wherein:
the plastic foam body is configured as a panel structure and comprises an outer panel, an inner panel facing away from the outer panel, and a side wall connecting the outer panel and the inner panel;
the support frame is connected to the inner panel and at least partially inlaid in the inner panel in a thickness direction to be wrapped in the plastic foam body.

2. The combined wrapping structure according to Claim 1, wherein a support surface of the outer panel is configured as a curved structure.

3. The combined wrapping structure according to Claim 1, wherein reinforcing ribs are arranged on the inner panel.

4. The combined wrapping structure according to Claim 3, wherein the inner panel is concaved, and the reinforcing ribs protrude with respect to the inner panel.

5. The combined wrapping structure according to Claim 3 or 4, wherein the reinforcing ribs are arranged in parallel or intersect with each other.

6. The combined wrapping structure according to Claim 3, wherein a functional structure is arranged on the inner panel and/or the reinforcing ribs, or between the reinforcing ribs.

7. The combined wrapping structure according to Claim 6, wherein the functional structure is a positioning groove used for positioning the support frame, and the positioning groove at least partially matches the support frame in shape.

8. The combined wrapping structure according to Claim 6, wherein the functional component is a connecting component used for installing or assembling the support frame.

9. The combined wrapping structure according to Claim 6, wherein the functional structure is a mounting groove used for mounting or receiving an attachment.

10. The combined wrapping structure according to Claim 1, wherein the support frame is made from at least one of metal, wood and a composite material.

11. The combined wrapping structure according to Claim 10, wherein the support frame is formed by a rod, a plate or a combination of the rod and the plate.

12. The combined wrapping structure according to Claim 11, wherein the plastic foam body and the support frame are formed integrally or assembled together.

13. The combined wrapping structure according to Claim 12, wherein the support frame is provided with a positioning structure matched with the plastic foam body, and the positioning structure is integrally formed on the support frame or arranged outside the support frame and/or on the plastic foam body 1.

14. The combined wrapping structure according to Claim 12, wherein the support frame and the plastic foam body are connected by a connector, partial wrapping, clamping or bonding.

15. An assembled sofa structure, comprising a support frame structure, the support frame structure comprising a hip support component, a back support component connected to the hip support component, and armrest components arranged on two sides of the hip support component, wherein at least the armrest components adopt the combined wrapping structure according to any one of Claims 1-14.

16. The assembled sofa structure according to Claim 15, wherein the support frame structure adopts detachable connection.

17. The assembled sofa structure according to Claim 15, wherein a leg support component is connected to the hip support component, and an angle of the leg support component and an angle of the back support component are adjustable.

18. The assembled sofa structure according to Claim 17, further comprising an electric angle adjustment component used for adjusting the angle of the leg support component and/or the angle of the back support component.
